# EUROPÄISCHE PATENTSCHRIFT

(11) **EP 0 985 584 B1**
(45) Veröffentlichungstag und Bekanntmachung des Hinweises auf die Patenterteilung: **18.08.2010**
(21) Anmeldenummer: 99116815.4
(22) Anmeldetag: 01.09.1999
(51) Int. Cl.: B60R 16/02

(54) **Verfahren zum Betreiben eines elektrischen Fahrzeug-Bordnetzes**
Vehicle power supply network operating method
Procédé de fonctionnement d'un réseau électrique de véhicule

(30) Priorität: 06.07.1999 DE 19931144; 13.01.1999 DE 19900964; 08.09.1998 DE 19840954
(43) Veröffentlichungstag der Anmeldung: 15.03.2000
(73) Patentinhaber: Volkswagen Aktiengesellschaft, 38436 Wolfsburg (DE)
(72) Erfinder: Rech, Bernd, Dr.-Ing., 38473 Tiddische-Hoitlingen (DE); Dierker, Uwe, 38550 Isenbüttel (DE); Teuner, Dieter, 38448 Wolfsburg (DE); Bäker, Bernard, 70180 Stuttgart (DE); Michels, Karsten, 38165 Lehre (DE)
(74) Vertreter: Patentanwälte Bressel und Partner

(56) Entgegenhaltungen:
- EP-A- 0 676 848
- US-A- 4 323 837
- US-A- 5 561 363
- US-A- 5 691 576
- PATENT ABSTRACTS OF JAPAN Bd. 015, Nr. 448 (E-1133), 14. November 1991 (1991-11-14) & JP 03 190534 A (NIPPONDENSO CO LTD), 20. August 1991 (1991-08-20)

## Beschreibung

Die Erfindung betrifft eine Verfahren zum Betreiben eines elektrischen Fahrzeug-Bordnetzes.

Aufgrund der zunehmenden Anzahl von elektrischen Komponenten in Kraftfahrzeugen stellt sich das Problem , diese mit ausreichender elektrischer Energie zu versorgen.

Aus der DE 39 36 638 C1 ist ein Verfahren zur Sicherung der elektrischen Energieversorgung bekannt, bei dem die elektrischen Verbraucher, die für den sicheren Betrieb des Kraftfahrzeuges nicht zwingend notwendig sind, in Gruppen unterteilt werden, wobei die Verbraucher dieser einzelnen Gruppen in Abhängigkeit des Ladungszustandes der Batterie abgeschaltet werden bzw. durch eine getaktete Bestromung nur eine reduzierte Leistung zur Verfügung gestellt bekommen.

Aus der DE 44 22 329 A1 ist ein Verfahren zum Betreiben eines elektrischen Fahrzeug-Bordnetzes bekannt, bei dem für die Verringerung der Versorgung von Verbrauchern mit elektrischer Energie die momentane Kapazität der Bordbatterie unter Berücksichtigung ihrer Historie und der Wirkungsgrad der elektrischen Energieversorgung, gegeben durch die aktuellen Wirkungsgrade von Antriebsmaschine und Generator, berücksichtigt wird.

Aus der EP 0 487 927 B1 ist ein Verfahren zur Spannungsregelung in Abhängigkeit vom Batterieladezustand bekannt, bei dem ein Spannungsregler über einen Schalttransistor den Energiestrom und somit die von einem Generator erzeugte, zur Ladung der Batterie und zur Versorgung von Verbrauchern erforderliche Spannung regelt, wobei während eines ersten Zeitintervalls die Regelspannung auf ihrem Normalwert gehalten wird und während eines zweiten Zeitintervalls die Regelspannung abgesenkt wird und die sich einstellende Batteriespannung gemessen wird und aus der gemessenen Batteriespannung in Abhängigkeit von abgespeicherten batterie- und bordnetztypischen Kenndaten der Ladezustand der Batterie ermittelt wird und bei erkanntem schlechtem Ladezustand geeignete Maßnahmen zur Verbesserung des Ladezustandes eingeleitet werden, wobei die Absenkung der Regelspannung im zweiten Intervall auf einen Wert deutlich größer Null erfolgt und daß während des ersten Zeitintervalls die Belastung durch das Bordnetz durch Bestimmung des Lastverhältnisses des Schalttransistors des Spannungsreglers unter Berücksichtigung der Drehzahl des Generators ermittelt wird. Als geeignete Gegenmaßnahme zur Verbesserung des Ladezustandes wird dabei die automatische oder manuelle Abschaltung von Verbrauchern, die Erhöhung der Motorlaufdrehzahl oder die Erhöhung der Regelspannung über ihren normalen Wert für eine vorgebbare Zeit unter der Beachtung, daß keine spannungskritischen Verbraucher eingeschaltet sind, durchgeführt.

Nachteilig an den bekannten Verfahren ist, daß diese jeweils nur bei bestimmten Bordnetzzuständen ansprechen.

Aus der US 5 561 363 A ist ein Verfahren zum Betreiben eines elektrischen Fahrzeug-Bordnetzes bekannt, mit einem durch eine Antriebsmaschine des Fahrzeugs antreibbaren Generator zum Laden einer Batterie und zum Speisen von elektrischen Verbrauchern, denen unterschiedliche Prioritäten zugeordnet werden. Nach der Zuschaltung einer neuen Last wird die Gesamtsumme der Ströme durch die Lasten mittels einer Tabelle mit vorgegebenen Lastströmen berechnet. Diese Gesamtsumme wird mit einem maximalen Wert des Generators verglichen, wobei bei einer Überschreitung des maximalen Wertes Verbraucher mit niedriger Priorität abgeschaltet werden.

Der Erfindung liegt daher das technische Problem zugrunde, ein Verfahren zum Betreiben eines Bordnetzes zu schaffen, mittels dessen umfassend auf verschiedene Bordnetzzustände reagiert werden kann und insbesondere kritische Bordnetzzustände vermieden werden.

Die Lösung des technischen Problems ergibt sich durch die Merkmale des Patentanspruchs 1. Weitere vorteilhafte Ausgestaltungen der Erfindung ergeben sich aus den Unteransprüchen.

Dabei wird vorausschauend ein kritischer Bordnetzzustand bei Hochstromverbrauchern dadurch vermieden, daß vor deren Aktivierung der Bordnetzzustand geprüft und prophylaktisch Verbraucher mit geringer Priorität abgeschaltet werden, um Spannungseinbrüche auf dem Bordnetz zu verhindern. Als Verbraucher werden vorzugsweise die Heizverbraucher abgeschaltet und erst wieder nach Deaktivierung der Hochstromverbraucher zugeschaltet, vorzugsweise nach einer vordefinierten Zeit nach der Deaktivierung der Hochstromverbraucher.

Weiter erfolgt eine fallweise Unterteilung der möglichen auftretenden Betriebszustände bei einem kritischen Bordnetzzustand. Zum einen wird unterschieden, ob der Generator aktiv ist oder nicht. Bei aktivem Generator wird zunächst versucht, mittels einer Erhöhung der Leerlaufdrehzahl den kritischen Bordnetzzustand zu beheben, was prinzipiell aus dem Stand der Technik bekannt. Dies erfolgt jedoch nur, falls die eingestellte Leerlaufdrehzahl unter einem oberen Leerlaufbereich nₗₗₘₐₓ liegt. Kann daher die Leerlaufdrehzahl nicht mehr erhöht werden, so wird statt dessen ein Verbraucher abgeschaltet, wobei nach jeder Maßnahme überprüft wird, wie sich der Bordnetzzustand verändert hat. Hat sich der Bordnetzzustand nach einer gewissen Zeit nicht verbessert, so wird der nächste Verbraucher abgeschaltet. Bei inaktivem Generator ist diese Vorgehensweise nicht möglich, so daß hier vorzugsweise nach einem Sicherheitszeitraum, die Standbeleuchtungen abgeschaltet werden, um einen Motorstart zu ermöglichen, wobei der Sicherheitszeitraum dem sicheren Einsteigen dient.

Ein weiterer Vorteil des Verfahrens ist, daß in den meisten Fällen für den Fahrzeuginsassen keine Komforteinbußen zu spüren sind. Möchte beispielsweise der Kraftfahrzeugführer eine elektrische Komfortkomponente wie beispielsweise einen elektrischen Fensterheber betätigen und führt dies zu einem kritischen Bordnetzzustand, der nur durch Abschaltung von Verbrauchern kompensiert werden kann, so wird der Verbraucher mit der niedrigsten Priorität abgeschaltet. Dies sind vorzugsweise die Heizverbraucher, deren temporäre Deaktivierung von den Fahrzeuginsassen nicht wahrgenommen wird. In Abweichung von diesem Konzept könnte auch die Zuschaltung der Komponente deaktiviert werden, was jedoch zu Irritationen führen könnte. Dieses Vorgehen wird jedoch zwingend, wenn die Komponente mit der niedrigsten Priorität zugeschaltet werden soll bzw. keine Komponenten mit niedriger Priorität abschaltbar sind. In diesen Fällen muß die Zuschaltung verhindert werden. Dabei kann vorgesehen sein, daß dieser Zuschaltwunsch gespeichert wird und nach einer gewissen Zeit wiederholt wird.

In einer weiteren bevorzugten Ausführungsform werden bei Erfassung einer Unfallsituation, beispielsweise durch eine Precrash-Sensorik, alle Heiz-Verbraucher abgeschaltet, um die Gefahr von Fahrzeugbränden zu minimieren.

In einer weiteren bevorzugten Ausführungsform werden in Abhängigkeit von dem Maß der Unterschreitung des Grenzwertes für den Bordnetzzustand gegebenenfalls mehrere Verbraucher gleichzeitig abgeschaltet oder mit reduzierter Leistung betrieben.

Die Anhebungen der Leerlaufdrehzahl werden vorzugsweise nur im Lastbetrieb des Motors vorgenommen, um sprunghafte Änderungen der Leerlaufdrehzahl zu vermeiden.

Die eingeleiteten Maßnahmen werden vorzugsweise in umgekehrter Reihenfolge wieder aufgehoben, wobei vorzugsweise eine Zuschaltung erst wieder erfolgt, wenn der Bordnetzzustand über einen gewissen Zeitraum oberhalb des Grenzwertes liegt. Des weiteren kann auch zusätzlich gefordert werden, daß der aktuelle Bordnetzzustand mit einem gewissen Spannungswert über dem Grenzwert liegt. Dies gewährleistet, daß nicht ständig Verbraucher zu- und abgeschaltet werden, sondern daß die Zuschaltung nur erfolgt, falls mit großer Wahrscheinlichkeit dies nicht erneut einen kritischen Bordnetzzustand erzeugt. Als weiteres Kriterium für die Zuschaltung kann das DF-Signal herangezogen werden.

Eine besondere Ausgestaltung der Erfindung ist dadurch gekennzeichnet, daß bei einem Defekt des Generatorreglers oder der Batterie und gleichzeitiger Unterschreitung der Mindestspannung auf Dauer alle nicht sicherheitsrelevanten Verbraucher deaktiviert werden, wobei zuerst Verbraucher mit Luxus- und Komfortfunktionen abgeschaltet werden.

Des weiteren wird auf einen Notlaufbetrieb umgeschaltet, wenn sämtliche nicht sicherheitsrelevanten Verbraucher abgeschaltet sind und die aktuelle Bordspannung die Mindestspannung über einen vorgegebenen Zeitraum unterschreitet. Damit wird gewährleistet, daß das Kraftfahrzeug im Noffall noch sicher bis zu einer Werkstatt oder zumindest bis zur nächsten Parkmöglichkeit betrieben werden kann.

Für den Fall, daß die Bordspannung auch bei Abschaltung von sicherheitsrelevanten Verbrauchern im Notlaufbetrieb unter einen vorgegebenen Sicherheitsschwellwert sinkt, wird ein Nothalt des Kraftfahrzeuges veranlaßt.

Eine weitere Fortführung der Erfindung ist dadurch gekennzeichnet, daß alle elektrischen Verbraucher durch elektrisch steuerbare Schalter aktivier- und deaktivierbar sind, wobei die Warnblinkanlage nur elektrisch aktivierbar ist. Damit wird sichergestellt, daß die bei einem Nothalt manuell oder automatisch eingeschaltete Warnblinkanlage von der Steuerung nicht abgeschaltet werden kann, auch wenn alle anderen Verbraucher bereits abgeschaltet sind.

Die Erfindung wird nachfolgend anhand eines bevorzugten Ausführungsbeipiels näher erläutert.

Die Fig. zeigen:
- Fig. 1: ein Ablaufdiagramm der Leerlaufdrehzahlerhöhung und
- Fig. 2: ein Flußdiagramm der Ermittlung der Bordnetzspannung.

Die Hauptaufgabe eines Bordnetzmanagements ist das Liegenbleiben eines Kraftfahrzeuges aufgrund einer zu weit entladenen Batterie zu vermeiden. Diese Aufgabe umfaßt den Schutz der Batterie vor zu großer zyklischer Belastung. Hierbei muß jedoch beachtet werden, daß die technische Sicherheit erhalten bleibt und Komforteinbußen bzw. Funktionseinschränkungen für die Kraftfahrzeugführer nur im Ausnahmefall auftreten. Vorzugsweise werden die nachfolgenden beschriebenen Maßnahmen möglichst fahrzeug- und motorunspezifisch ausgebildet, um diese möglichst universell in verschiedenen Fahrzeugtypen einsetzen zu können.

Die Maßnahmen des Lastmanagements lassen sich im wesentlichen in drei Fälle unterteilen:
- Der Bordnetzzustand wird als kritisch erkannt;
- Vermeidung von Spannungseinbrüchen aufgrund der Einschaltung von Hochstromverbrauchern wie beispielsweise ABS-Bremsung oder falls der Strom einer Lenkhilfpumpe Iₗₑₙₖ > I_{len_grenz} bei n_{MOT} < n_{LLmax} ;
- Crashfall.

Diese verschiedenen Maßnahmen sollen nun näher erläutert werden. Dabei läßt sich wiederum der Zustand, daß der Bordnetzzustand als kritisch erkannt wird, in folgende Fälle zergliedern:
- Der kritische Bordnetzzustand wird bei aktivem Generator und Motordrehzahlen unter der maximalen Leerlaufdrehzahl n_{LLmax} erkannt;
- Der kritische Bordnetzzustand wird bei aktivem Generator und Motordrehzahlen über der maximalen Leerlaufdrehzahl n_{LLmax} erkannt;
- Der kritische Bordnetzzustand wird bei inaktivem Generator erkannt.

Hierzu werden den vorhandenen elektrischen Komfortkomponenten Prioritäten zugeordnet. Wird nun ein kritischer Bordnetzzustand bei aktivem Generator und Motordrehzahlen unter n_{LLmax} erkannt, so wird zunächst die Leerlaufdrehzahl angehoben. Nach jeder Maßnahme wird dann stets der Bordnetzzustand wieder überprüft. Bleibt der Bordnetzzustand kritisch, so erfolgt danach die sukzessive Abschaltung der elektrischen Komfortkomponenten entsprechend ihrer Priorität. Um nun die Auswirkungen der einzelnen Maßnahmen sinnvoll zu erfassen, liegt zwischen den einzelnen Maßnahmen eine Pause. Hiervon gibt es eine Ausnahme, die später noch erläutert wird. Wird eine Leerlaufanhebung gefordert, aber vom Motorsteuergerät nicht umgesetzt, so wird die nächste Maßnahme erst nach einer Wartezeit eingeleitet. Wird der kritische Bordnetzzustand bei Motordrehzahlen größer n_{LLmax} erkannt, so wird gleichzeitig mit einer Anhebung der Leerlaufdrehzahl die erste elektrische Komfortkomponente abgeschaltet. Ansonsten erfolgen die daran anschließenden Maßnahmen analog dem Verhalten bei Motordrehzahlen unter n_{LLmax}. Bei inaktivem Generator werden alle möglichen Komfortkomponenten, wie beispielsweise Innenleuchten, Leselampe und Kofferraumleuchten, abgeschaltet.

Um Spannungseinbrüche bei aktiven sicherheitsrelevanten Hochstromverbrauchern zu begrenzen, werden die elektrischen Komfortkomponenten mit niedriger Priorität wie beispielsweise Heizverbraucher Frontscheibe, Heckscheibe und Sitze abgeschaltet und frühestens nach einem vorgebbaren Zeitintervall von beispielsweise 5s nach Deaktivierung der Hochstromverbraucher wieder zugeschaltet.

Im Crashfall werden alle Heizverbraucher abgeschaltet. Zur Erfassung des Crashfalls kann beispielsweise ein Auslösesignal eines Airbags ausgewertet werden. Wird das Fahrzeug anschließend wieder in Betrieb genommen, so werden die Heizverbraucher wieder eingeschaltet.

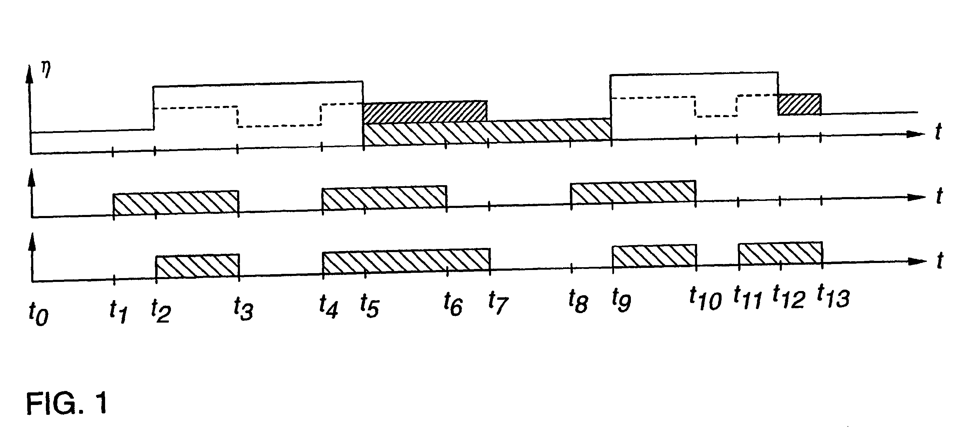

In der Fig. 1 ist ein beispielhaftes Ablaufdiagramm dargestellt, wobei im oberen Diagramm die Drehzahl n, im mittleren Diagramm die Anforderung des Bordnetzsteuergerätes und im unteren Diagramm die Antwort des Motorsteuergerätes dargestellt ist. In den Zeiträumen zwischen t₀ und t₂, t₅ und t₉, bzw., nach t₂ befindet sich der Motor im Leerlauf. Zum Zeitpunkt t₁ fordert das Bordnetzsteuergerät aufgrund eines kritischen Bordnetzzustandes eine Anhebung der Leerlaufdrehzahl an und ein entsprechendes Bit wird gesetzt. Da im Leerlauf selbst keine sprunghafte Anhebung der Leerlaufdrehzahl stattfinden soll, reagiert das Motorsteuergerät zunächst nicht. Zum Zeitpunkt t₂ wechselt der Motor vom Leerlauf zum Lastbetrieb, wobei die Motordrehzahl entsprechend erhöht wird. Das Motorsteuergerät setzt nun als Antwort auf die Aufforderung vom Bornetzsteuergerät ein Bit und legt eine erhöhte Leerlaufdrehzahl fest, die gestrichelt unter der tatsächlichen Drehzahl eingezeichnet ist. Zum Zeitpunkt t₃ hebt das Bordnetzsteuergerät seine Anforderung auf und setzt das Bit zurück, weil der Bordnetzzustand als nicht mehr kritisch erkannt wurde. Entsprechend setzt auch das Motorsteuergerät seine Antwortbit zurück und hebt die Anhebung der eingestellten Leerlaufdrehzahl wieder auf. Zum Zeitpunkt t₄ wird erneut der Bordnetzzustand als kritisch erkannt, und das Bordnetzsteuergerät fordert durch Setzen des Bits eine Anhebung der Leerlaufdrehzahl. Das Motorsteuergerät setzt daraufhin sofort sein Antwortbit, da der Motor sich im Lastbetrieb befindet. Die im Motorsteuergerät abgelegte Leerlaufdrehzahl wird entsprechend der Anforderung um eine Stufe erhöht. Zum Zeitpunkt t₅ wechselt der Motor vom Lastbetrieb in den Leerlauf, wobei die erhöhte Leerlaufdrehzahl übernommen wird. Zum Zeitpunkt t₆ wird der Bordnetzzustand als nicht mehr kritisch erkannt und das Anforderungsbit zurückgesetzt. Aufgrund anderer Anforderungen hält das Motorsteuergerät die erhöhte Leerlaufdrehzahl bis zum Zeitpunkt t₇ aufrecht. Anschließend setzt das Motorsteuergerät das Antwortbit zurück, und die Leerlaufdrehzahl wird reduziert. Zum Zeitpunkt t₈ wird der Bordnetzzustand wieder als kritisch erkannt und das Anforderungsbit gesetzt. Da sich der Motor im Leerlauf befindet, erfolgt die Antwort des Motorsteuergerätes erst zum Zeitpunkt t₉, wenn der Motor wieder in den Lastbetrieb wechselt. Zum Zeitpunkt t₁₀ wird der Bordnetzzustand als nicht mehr kritisch erkannt und das Anforderungsbit zurückgesetzt. Das Motorsteuergerät setzt daraufhin sein Antwortbit zurück und hebt die erhöhte Leerlaufdrehzahleinstellung auf. Zum Zeitpunkt t₁₁ hebt dann das Motorsteuergerät aufgrund irgendwelcher internen Erfordernisse unabhängig vom Bordnetzzustand die Leerlaufdrehzahl an, die dann zum Zeitpunkt t₁₂ vom Motor in der Leerlaufphase übernommen wird.

Um zu Beginn der Fahrt die Funktionalität der vom Fahrer gewünschten Komponenten zur Verfügung zu stellen, dürfen in der Startphase im Regelfall keine Verbraucher abgeschaltet werden. Nach dieser Phase können die einzelnen Verbraucher nach ihrer Priorität ab- oder zugeschaltet werden. Niedrige Priorität bedeutet frühes Ausschalten. Bei aktivem Generator werden die Innenraum-, Kofferraum- und Leselampe trotz Abschaltung während eines kritischen Bordnetzzustandes eingeschaltet, um das Beispiel ein sicheres Ein- und Aussteigen zu gewährleisten.

Generell gilt, daß die Hardwareanforderungen dazu führen können, daß einzelne Verbraucher nicht bei allen Schalffunktionen berücksichtigt werden (z.B. Akustik, Lebensdauer). Die Zeitgrenzen und Prioritäten sind daher vorzugsweise parametierbar.

Unter drei Bedingungen wird die Entscheidung getroffen, vorher aktivierte Maßnahmen zurückzunehmen.
a) Nach einer getroffenen Maßnahme (Abschaltung oder Leerlaufdrehzahlanhebung) liegt die Batteriespannung für einen bestimmten Zeitraum über der kritischen Batteriespannung
b) Während der Wartezeit gemäß a) liegt die Batteriespannung über der kritischen Spannung, und das DF-Signal liegt für mindestens einen Zeitraum unter einem Grenzwert, so daß zu erwarten ist, daß beim Zuschalten eines Verbrauchers der Strombedarf durch den Generator gedeckt wird. Bei fehlerhafter Signalerfassung (DF- "FF"), d.h. ein physikalisch unsinniger Wert wurde für DF erfaßt, enffällt diese Einschaltbedingung.
c) Hat bereits eine Rücknahme (Wiedereinschaltung) stattgefunden (Bedingungen a oder b erfüllt) und liegt die Spannung mehr als ein U_{delta} über der kritischen Batteriespannung Uₖᵣᵢₜ, kann nach Ablauf einer Wartezeit ein weiterer Verbraucher zugeschaltet werden. Solange die Spannung nicht um U_{delta} die kritische Betriebsspannung Uₖᵣᵢₜ überschreitet, erfolgt kein weiteres Einschalten.

Die getroffenen Maßnahmen werden in umgekehrter Reihenfolge ihrer Aktivierung wieder zurückgenommen.

Hauptsächlich geschieht die Ermittlung der Bordnetzsituation durch den Vergleich der ermittelten Spannung mit dem zulässigen Spannungswert. Bei der Ermittlung der Bordnetzsituation ist größte Sorgfalt geboten, da ein Fehler entweder das Liegenbleiben eines Fahrzeuges oder das unnötige Wegschalten von Verbrauchern zur Folge haben kann. Die Bordnetzsituation wird insgesamt aus den Größen Batteriespannung, DF-Signal und der Information über eingeschaltete Hochstromverbraucher mit kurzer Einschaltdauer ermittelt.

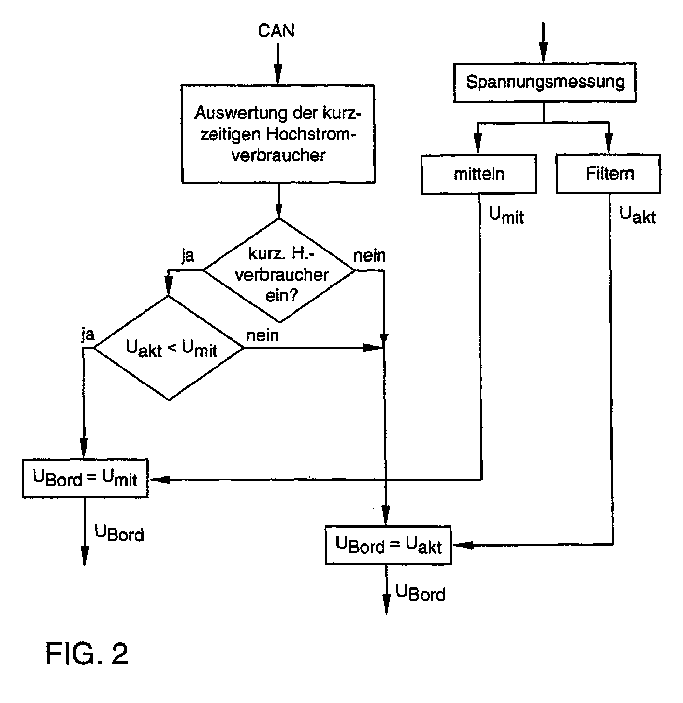

Das Ermitteln der Batteriespannung ist in Fig. 2 in Form eines Flußdiagramms dargestellt. Die gemessene Batteriespannung wird auf zwei verschiedene Weisen aufbereitet. Einmal wird der aktuelle Spannungswert Uₐₖₜ gewonnen, indem der Meßwert derart gefiltert wird, daß kurzfristige Spannungseinbrüche zum Beispiel durch das Einschalten induktiver Lasten und die Responsefunktion des Generators den Wert nicht verfälschen. Zum anderen wird ein zeitlicher Mittelwert Uₘᵢₜ gebildet (ungewichtete, zeitliche Mitteilung über einen festen Zeitraum), auf den die Kurzzeitverbraucher nur einen geringen Einfluß haben.

Ein Verbraucher gilt dann als Hochstromverbraucher mit kurzer Einschaltdauer, wenn die zu erwartende Einschaltzeit tₑᵢₙ kleiner 30 Sekunden bei einem Strom größer 10A ist. Solche Verbraucher sind zum Beispiel: Motor der Servolenkung, ABS, Motoren Fensterheber, Wäscherpumpe und SRA-Pumpe. Ist einer der oben beschriebenen Hochstromverbraucher eingeschaltet und liegt der aktuelle Spannungswert unter dem gemittelten, wird der Mittelwert zur Bordnetzzustandserkennung herangezogen, ansonsten der aktuelle Spannungswert. Die zulässige Batteriespannung wird für aktiven und inaktiven Motor unterschiedlich gewählt.

## Patentansprüche

1. Verfahren zum Betreiben eines elektrischen Fahrzeug-Bordnetzes, mit einem durch eine Antriebsmaschine des Fahrzeugs antreibbaren Generator zum Laden einer Batterie und zum Speisen von elektrischen Verbrauchern, denen unterschiedliche Prioritäten zugeordnet werden,
**dadurch gekennzeichnet, daß**
vor Aktivierung von Hochstrom-Verbrauchern, wie insbesondere ein ABS oder eine Servolenkpumpe, elektrische Verbraucher mit geringer Priorität abgeschaltet werden.

2. Verfahren nach Anspruch 1,
**dadurch gekennzeichnet, daß**
die abgeschalteten Verbraucher nach der Deaktivierung der Hochstrom-Verbraucher nach einer vordefinierten Zeit wieder zugeschaltet werden.

3. Verfahren nach Anspruch 1 oder 2, umfassend folgende zusätzliche Verfahrensschritte:
a) Erhöhen der Leerlaufdrehzahl bei aktivem Generator, falls der Bordnetzzustand einen Grenzwert unterschreitet und die Motordrehzahl unter einem oberen Leerlaufbereich n_{LLmax} liegt,
b) sukzessives Abschalten der Verbraucher in umgekehrter Reihenfolge ihrer Priorität, falls nach Verfahrensschritt a) noch immer der Grenzwert für den kritischen Bordnetzzustand unterschritten wird oder die Motordrehzahl über dem oberen Leerlaufbereich n_{LLmax} liegt, wobei nach jeder Maßnahme der Bordnetzzustand erneut überprüft wird oder
c) Abschalten von Standbeleuchtungen, falls der Grenzwert für den Bordnetzzustand bei inaktivem Generator unterschritten wird.

4. Verfahren nach einem der vorangegangenen Ansprüche, mittels eines Precrash-Sensors,
**dadurch gekennzeichnet, daß**
bei Erfassung einer Unfallsituation alle elektrischen Heizverbraucher abgeschaltet werden.

5. Verfahren nach einem der vorangegangenen Ansprüche,
**dadurch gekennzeichnet, daß**
in Abhängigkeit von dem Maß der Unterschreitung des Grenzwertes des Bordnetzzustandes, mehrere elektrischer Verbraucher geringer Priorität gleichzeitig abgeschaltet oder mit reduzierter Leistung betrieben werden.

6. Verfahren nach einem der Ansprüche 3 bis 5,
**dadurch gekennzeichnet, daß**
Anhebungen der Leerlaufdrehzahl nur im Lastbetrieb des Motor eingestellt werden.

7. Verfahren nach einem der vorangegangenen Ansprüche,
**dadurch gekennzeichnet, daß**
die eingeleiteten Maßnahmen in umgekehrter Reihenfolge aufgehoben werden.

8. Verfahren nach Anspruch 7,
**dadurch gekennzeichnet, daß**
eine Zuschaltung erst wieder erfolgt, wenn der Bordnetzzustand für einen definierbaren Zeitraum über dem Grenzwert liegt.

9. Verfahren nach Anspruch 8,
**dadurch gekennzeichnet, daß**
die Zuschaltung nur erfolgt, wenn gleichzeitig das DF-Signal für einen bestimmten Zeitraum unterhalb eines Grenzwertes liegt.

10. Verfahren nach einem der Ansprüche 7 bis 9,
**dadurch gekennzeichnet, daß**
nach einer erfolgten Zuschaltung die nächste Zuschaltung nur erfolgt, wenn der Bordnetzzustand für einen Zeitraum um einen freidefinierten Spannungswert den Grenzwert überschreitet.

11. Verfahren nach einem der vorangegangenen Ansprüche,
**dadurch gekennzeichnet, daß**
bei einem Defekt des Generatorreglers oder der Batterie und gleichzeitiger Unterschreitung des Grenzwertes für den Bordnetzzustand alle nicht sicherheitsrelevanten Verbraucher auf Dauer abgeschaltet werden.

12. Verfahren nach Anspruch 11,
**dadurch gekennzeichnet, daß**
auf einem Notlaufbetrieb umgeschaltet wird, wenn sämtliche nicht sicherheitsrelevanten Verbraucher abgeschaltet sind und der Bordnetzzustand den Grenzwert unterschreitet.

13. Verfahren nach Anspruch 12,
**dadurch gekennzeichnet, daß**
ein Nothalt des Kraftfahrzeuges veranlaßt wird, wenn der Bordnetzzustand auch bei Abschaltung von sicherheitsrelevanten Verbrauchern im Notlaufbetrieb unter einen Sicherheitsschwellwert sinkt.

## Claims

1. Electrical vehicle power supply network operating method, with a generator which can be driven by a drive machine of the vehicle in order to charge a battery and to feed electrical loads to which different priorities are assigned,
**characterized in that**
electrical loads with a low priority are switched off before high-power loads, such as, in particular an ABS or a power steering pump, are activated.

2. Method according to Claim 1,
**characterized in that**
the switched-off loads are switched on again after a predefined time after the high-power loads have been deactivated.

3. Method according to Claim 1 or 2, comprising the following additional method steps:
a) increasing of the idling speed when the generator is active if the state of the power supply network drops below a limiting value and the engine speed is below an upper idling range n_{LLmax},
b) successive switching off of the loads in the reverse sequence of their priority, if, after method step a), the limiting value for the critical power supply network state is still undershot or the engine speed is above the upper idling range n_{LLmax}, wherein the power supply network state is checked again after each measure, or
c) switching off of stationary-state lighting systems if the limiting value for the power supply network state is undershot when the generator is inactive.

4. Method according to one of the preceding claims, by means of a precrash sensor,
**characterized in that**
when an accident situation is detected, all the electrical heating loads are switched off.

5. Method according to one of the preceding claims,
**characterized in that**
a plurality of electrical loads with low priority are switched off simultaneously or operated with reduced power depending on the degree to which the limiting value of the power supply network state is undershot.

6. Method according to one of Claims 3 to 5,
**characterized in that**
increases in the idling speed are set only in the under-load operating mode of the engine.

7. Method according to one of the preceding claims,
**characterized in that**
initiated measures are cancelled in the reverse order.

8. Method according to Claim 7,
**characterized in that**
switching on again is not carried out until the power supply network state is above the limiting value for a definable time period.

9. Method according to Claim 8,
**characterized in that**
switching on takes place only if the DF signal is simultaneously below a limiting value for a specific time period.

10. Method according to one of Claims 7 to 9,
**characterized in that**
after switching on has taken place, the next switching-on process occurs only if the power supply network state exceeds the limiting value by a freely defined voltage value for a time period.

11. Method according to one of the preceding claims,
**characterized in that**
when there is a defect in the generator regulator or the battery and at the same time the limiting value for the power supply network state is undershot, all the loads which are not relevant for safety are permanently switched off.

12. Method according to Claim 11,
**characterized in that**
switching over to an emergency operating mode is performed if all the loads which are not relevant for safety are switched off and the power supply network state drops below the limiting value.

13. Method according to Claim 12,
**characterized in that**
an emergency stop of the motor vehicle is brought about if the power supply network state drops below a safety threshold value even when safety-relevant loads are switched off in the emergency operating mode.

## Revendications

1. Procédé d'exploitation d'un réseau de bord électrique pour véhicule, comprenant un générateur qui peut être entraîné par un groupe propulseur du véhicule pour charger une batterie et pour alimenter des charges électriques auxquelles sont affectées des priorités différentes, **caractérisé en ce que** les charges électriques de faible priorité sont mises hors circuit avant d'activer les charges à courant fort, comme notamment un ABS ou une pompe de direction assistée.

2. Procédé selon la revendication 1, **caractérisé en ce que** les charges mises hors circuit sont remises en circuit après une durée prédéfinie après la désactivation des charges à courant fort.

3. Procédé selon la revendication 1 ou 2, comprenant en plus les étapes suivantes :
a) Accroissement du régime de ralenti lorsque le générateur est actif si l'état du réseau de bord devient inférieur à une valeur limite et si le régime du moteur est inférieur à une plage de ralenti supérieure n_{LLmax},
b) Mise hors circuit successive des charges dans l'ordre inverse de leur priorité si, après l'étape a), l'état du réseau de bord est toujours inférieur à la valeur limite définie pour l'état critique ou si le régime du moteur est supérieur à la plage de ralenti supérieure n_{LLmax}, l'état du réseau de bord étant revérifié après chaque disposition ou
c) Mise hors circuit des feux de position si l'état du réseau de bord est inférieur à la valeur limite alors que le générateur est inactif.

4. Procédé selon l'une des revendications précédentes, au moyen d'un détecteur de pré-collision, **caractérisé en ce que** toutes les charges électriques de chauffage sont mises hors circuit en cas de détection d'une situation d'accident.

5. Procédé selon l'une des revendications précédentes, **caractérisé en ce que** suivant le montant duquel l'état du réseau de bord est inférieur à la valeur limite, plusieurs charges électriques de faible priorité sont mises hors circuit simultanément ou utilisées avec une puissance réduite.

6. Procédé selon l'une des revendications 3 à 5, **caractérisé en ce que** les accroissements du régime du ralenti ne sont suspendus que lorsque le moteur fonctionne en charge.

7. Procédé selon l'une des revendications précédentes, **caractérisé en ce que** les dispositions engagées sont annulées dans l'ordre inverse.

8. Procédé selon la revendication 7, **caractérisé en ce qu'**une mise en circuit n'a de nouveau lieu que lorsque l'état du réseau de bord est supérieur à la valeur limite pendant une période à définir.

9. Procédé selon la revendication 8, **caractérisé en ce que** la mise en circuit n'a lieu que lorsque le signal DF est en même temps inférieur à une valeur limite pendant une période donnée.

10. Procédé selon l'une des revendications 7 à 9, **caractérisé en ce que** la prochaine mise en circuit après une mise en circuit effectuée n'a lieu que lorsque l'état du réseau de bord est supérieur à la valeur limite pendant une période donnée d'une valeur de tension définie librement.

11. Procédé selon l'une des revendications précédentes, **caractérisé en ce qu'**en cas de défaillance du régulateur du générateur ou de la batterie avec en même temps l'état du réseau de bord qui est inférieur à la valeur limite, toutes les charges qui ne concernent pas la sécurité sont mises hors circuit durablement.

12. Procédé selon la revendication 11, **caractérisé en ce qu'**une permutation sur un mode de secours a lieu lorsque toutes les charges qui ne concernent pas la sécurité sont mises hors circuit et que l'état du réseau de bord est inférieur à la valeur limite.

13. Procédé selon la revendication 12, **caractérisé en ce qu'**un arrêt d'urgence du véhicule automobile est commandé lorsque l'état de réseau de bord chute au-dessous d'une valeur de seuil de sécurité dans le mode de secours même lorsque les charges qui concernent la sécurité ont été mises hors circuit.
